# EUROPEAN PATENT APPLICATION

(11) **EP 1 810 563 A1**
(43) Date of publication of application: **25.07.2007**
(21) Application number: 06075158.3
(22) Date of filing: 24.01.2006
(51) Int. Cl.: A01D 45/00

(54) **Arrangement and method for manually harvesting and processing mushrooms**

(71) Applicant: Verdellen, Gerardus Jacobus Wilhelmus, 5961 PP Horst (NL)
(72) Inventor: Verdellen, Gerardus Jacobus Wilhelmus, 5961 PP Horst (NL)
(74) Representative: Dorna, Peter

(57) **Abstract**

The invention relates to an arrangement for processing cultivated mushrooms, comprising at least one elongated cultivating bed (3) for mushrooms, which extends in a longitudinal direction in a cultivating space (1), at least one personnel-moving device, which functions to move a mushroom picker (5) with respect to the cultivating bed (3) for manually harvesting mushrooms, separating the bottoms from the stems of the harvested mushrooms and packing the harvested mushrooms from which the bottoms have been separated in a container, characterized in that at least one conveyor (7) is provided, which conveyor (7) is arranged for conveying containers filled with mushrooms from which the stem bottoms have been removed to a location outside the cultivating space. The present invention furthermore relates to a method for manually harvesting mushrooms and transporting the harvested mushrooms to a processing space.

## Description

The present invention relates to an arrangement for processing cultivated mushrooms, comprising at least one elongated cultivating bed for mushrooms, which extends in a longitudinal direction in a cultivating space, at least one personnel-moving device, which functions to move a mushroom picker with respect to the cultivating bed for harvesting mushrooms, separating the bottoms from the stems of the harvested mushrooms and packing the harvested mushrooms from which the bottoms have been separated in a container. A cultivating bed may consist of a number of boxes arranged side by side or of a carrier containing loosely deposited substrate.

Such an arrangement is known, it is used for manually harvesting mushrooms in situations in which a number of cultivating beds extend one above the other in longitudinal direction. A stand is provided on both sides of the cultivating beds, from which a so-called lorry is suspended, which can be moved either manually or mechanically along the cultivating beds. There are also lorries that can be moved on wheels along the cultivating beds, however. A mushroom picker is moved both in longitudinal direction and in vertical direction on the lorry so as to enable him or her to harvest mushrooms that have reached a specified size from the cultivating beds that are disposed one above the other. The lorry is provided with a storage space for storing empty containers, into which the mushroom picker places the mushrooms after having harvested the mushrooms and having cut off the bottoms. The mushroom picker may place mushrooms in different packing units upon moving along the cultivating beds, for example by grading the mushrooms according to weight. Once a number of containers have been filled, the mushroom picker carries the full containers to a collecting space, from where the harvested mushrooms are transported to a packing space at a later stage. A drawback of such an arrangement, however, is the fact that the mushroom picker needs to carry a heavy load from the lorry to the collecting space each time. This is especially disadvantageous because generally the harvesting of mushrooms is carried out by women, for whom the carrying of the mushrooms constitutes an extra heavy burden.

Consequently it is an object of the present invention to provide an arrangement as referred to in the introduction which is capable of relieving a mushroom picker of part of his or her burden. According to the present invention, this object is achieved in that at least one conveyor is provided, which conveyor is arranged for conveying containers filled with mushrooms from which the stem bottoms have been removed to a location outside the cultivating space. Since the mushrooms are carried off on the conveyor, a mushroom picker is relieved of the burden of manually carrying harvested mushrooms to a collecting location. An additional advantage is that the mushroom picker can spend a greater part of his or her working time on the actual harvesting of mushrooms, as a result of which his or her production will increase. After all, there is no need for the mushroom picker to leave the lorry all the time for taking away the mushrooms, but he or she will be able to continue his or her harvesting activities without interruption.

Furthermore, arrangements are known for mechanically harvesting mushrooms that have been cultivated on a cultivating bed. With these arrangements, a knife that extends across the width of a cultivating bed moves along at least part of the length of a cultivating bed, thereby cutting off all the mushrooms that are present in the cultivating bed. When such an arrangement is used, the mushrooms are carried off in unpacked condition via conveyor belts for packing and further processing. Another important difference with the arrangement according to the invention is that the mushrooms are bruised during said mechanical harvesting. As a rule these mushrooms are only suitable for direct preparation and preservation. The mushrooms that are harvested by hand are less easily damaged, so that they can be sold in unprepared condition. Yet another important difference is that when mushrooms are harvested by hand, only mushrooms of a specified size are harvested. The mushrooms in a cultivating bed can be selectively harvested one or more times every day, whereas all the mushrooms (of different sizes) are cut off when harvesting takes place mechanically.

Furthermore, arrangements are known wherein mushrooms are manually harvested and subsequently carried off in unpacked condition on a conveyor. In that case the mushroom picker does not remove the bottoms from the mushrooms stems, however, but the mushrooms are placed on the conveyor with the bottoms still connected to the stems. The conveyor is made up of two parallel conveyor belts arranged at a diverging angle with respect to each other, which conveyor belts are spaced some distance apart at their bottom sides, thus forming a gap, and which slope upwards in directions away from each other. The gap is so dimensioned that when in use the stems of the mushrooms move into the gap, whilst the caps of the mushrooms are supported by the two parallel conveyors, so that the mushrooms are oriented in a straight, hanging position, as it were. Downstream of the belt, two rotary knives are provided under the gap between the belts, which knives separate the bottoms from the mushroom stems that are carried past said knives. At a location further downstream of the conveyor belts in the cultivating space, the mushrooms are packed in boxes or crates and transported to another space therein for further processing. Apart from the fact that the bottoms are cut off mechanically after the mushrooms have been transported away from the picker in unpacked condition, it would not even be possible, or at least not obvious, to transport mushrooms in packed condition on conveyor belts of this kind, because there is a risk of mushrooms falling out of the containers, if said containers in fact can remain in position on the sloping conveyor belts.

Preferably, the conveyor comprises a conveying surface which extends at least substantially horizontally in a direction perpendicular to the direction of transport. In this way a stable surface for the container, such as a box or a crate, is provided, so that there is no risk of mushrooms falling out of the container during transport, or said risk is at least minimised.

In a preferred embodiment of the invention, said at least one personnel-moving device is guidingly connected in use to a stand that supports a cultivating bed. The guiding arrangement make it easier to orient the personnel-moving device with respect to a cultivating bed.

Said at least one personnel-moving device is preferably motor-driven, and the speed of movement of said at least one personnel-moving device is preferably adjustable. Because the personnel-moving device is motor-driven, a mushroom picker need not move the personnel-moving device by hand, which also relieves the mushroom picker of part of his or her burden. Because the speed can be adjusted, it is possible to set the length of time for harvesting a cultivating bed. For example, the time can be set in dependence on the composition of the mushrooms that are to be harvested and empirical data relating to the mushroom picker in question, possibly in combination with the composition of the mushrooms to be harvested. Significant differences exist between experienced and less experienced mushroom pickers. In addition, some mushroom pickers are more efficient in harvesting relatively small mushrooms, whereas other mushroom pickers are more efficient in harvesting relatively large mushrooms.

In a preferred embodiment of the invention, said at least one conveyor is so positioned with respect to a cultivating bed to be harvested that said at least one personnel-moving device moves between the cultivating bed and said at least one conveyor in use, and said at least one conveyor is preferably positioned within reach of the mushroom picker from said at least one personnel-moving device in use. As a result, the mushroom picker can easily move the mushroom-filled containers on the conveyor without having to get off the personnel-moving device.

It is furthermore preferable if said at least one conveyor extends at least substantially parallel to the longitudinal direction of said at least one cultivating bed, substantially along the entire length thereof. The conveyor will thus be within reach from the personnel-moving device at all times, at least when the personnel-moving device is oriented with respect to said at least one cultivating bed in such a manner that mushrooms can be harvested from said at least one cultivating bed.

Said at least one conveyor is preferably adjustable for height. Thus it is possible to position said at least one conveyor at an ergonomically correct height for a mushroom picker in question.

Furthermore preferably, the vertical adjustment of said at least one conveyor is linked to the vertical position of said at least one personnel-moving device. Because of this aspect, the conveyor will remain oriented at the correct height with respect to a mushroom picker, also when the mushroom picker is moved in vertical direction on the personnel-moving device with a view to harvesting cultivating beds that are disposed one above the other.

Said at least one conveyor is preferably a belt conveyor or a roller conveyor. Belt conveyors and roller conveyors, regardless of their type, are quite suitable for transporting mushroom-filled containers in this situation. The frames of said conveyors extend passively over an entire required distance, at least in horizontal direction, and consequently they need not be moved in horizontal direction during the harvesting process. Furthermore, such conveyors are relatively inexpensive means of transport.

In a preferred embodiment of the invention, said at least one conveyor extends as far as a packing space for packing the mushrooms in an outer pack. The advantage of this arrangement is that the transport from the harvesting space to the packing space takes place in an entirely mechanised manner, so that said transport does not involve relatively high personnel costs. In addition, delays caused by intermediate storage during the processing of the mushrooms are prevented in this manner.

Preferably, a number of conveyors are provided, which conveyors discharge the packed mushrooms from one or more cultivating spaces onto a collecting conveyor. Think in this connection of two or more parallel cultivating beds in a cultivating space, in which at least one conveyor extends on either side of each cultivating bed or on either side of at least a number of cultivating beds disposed one above the other, in which case a common conveyor may be provided between two cultivating beds disposed beside each other. Furthermore, conveyors may extend from different (adjoining) cultivating spaces.

The collecting conveyor preferably extends at least partially into a collecting space outside the cultivating space, which collecting space is climate-controlled. This makes it possible to maintain the mushrooms in the collecting space at a desired temperature, which has a positive effect on the shelf life of the mushrooms.

The collecting space preferably comprises refrigeration apparatus for cooling down the mushrooms in the collecting space to a temperature below 10 °C. Said cooling preferably takes place relatively quickly. This (accelerated) cooling prolongs the shelf life of the mushrooms.

Furthermore, said at least one conveyor or said collecting conveyor preferably comprises a buffering portion, so that it is possible to form a buffer of harvested and packed mushrooms that are to be packed into an outer pack. In this way the harvesting process and the packing process are unlinked to a certain extent, making it possible to cope with changes in the capacity between the two conveyors by making use of a buffer.

In another preferred embodiment of the invention, the arrangement comprises a reading device for reading a code that is present on a container. In this way information that is present on a container can be automatically read and processed. If each container is provided with a unique code, it is possible to collect data relating to a mushroom picker, the origin (the cultivating bed in question) of the contents, etc. This offers possibilities for analysing a harvesting process or verifying the origin of a product, for example in case products from a particular cultivating bed are unfit for consumption.

Preferably, the arrangement furthermore comprises a weighing device for weighing mushroom-filled packing units. This makes it possible to verify for each individual container whether it contains the correct weight and to calculate the overall yield by adding up the weights of the individual packing units.

Preferably, the weighing device is connected to the reading device and to a memory for the storage of data relating to weights per code. This forms a basis for various analyses with regard to the harvesting process, the yield per cultivating bed and the productivity of the mushroom pickers.

The arrangement preferably comprises a sorting device for sorting various containers according to at least one specified weight range. Thus, containers having a correct weight can be distinguished from containers whose weight is too high or too low, and to distinguish between packing units intended for a relatively high packing weight and packing units intended for a relatively low packing weight.

Preferably, the arrangement furthermore comprises a bypass conveyor on which containers having a weight outside said at least one specified weight range are to be placed. In this way packing units having a correct weight can be forwarded to the packing device, whilst containers having a weight outside said at least one specified weight range are kept apart, so that the correct weight can be realised yet. This is especially advantageous because each container must have a minimum packing weight. In practice, it has been customary so far to fill containers relatively full, i.e. with overweight. The present arrangement makes it possible on the one hand to have a picker fill the container with less weight, because a container that does not weigh enough cannot get to the packing device and thus cannot reach the consumer. On the other hand, the weight of packing units that contain a relatively great deal of mushrooms is corrected and the excess weight can be removed and be placed into new packing units. It will be apparent to those skilled in the art that significant savings can be realised in this way.

The arrangement preferably comprises at least one packing device for packing the containers into an outer pack. Thus, a continuous process from harvesting up to and including the packing of mushrooms into an outer pack for further transport can be realised. In this way it becomes possible to optimise the time required for this process, which will have a positive effect on the shelf life of the mushrooms.

Preferably, the arrangement comprises a number of packing devices for the parallel packing of various containers having a weight within various specified weight ranges into outer packs. Thus, various kinds of packing units can be processed simultaneously in combination with the sorting device to obtain uniform packing units. Alternatively, sorting for the various re-packing devices can take place manually.

The present invention further relates to a method for manually harvesting mushrooms and transporting the harvested mushrooms to a processing space, comprising the steps of:
a) a mushroom picker manually harvesting a mushroom from a cultivating bed for mushrooms;
b) the mushroom picker separating the bottom from the stem of the mushroom;
c) the mushroom picker placing the mushroom from which the stem bottoms has been separated into a container;
d) transporting the container filled with a number of manually harvested mushrooms from which the stem bottoms have been separated to a processing space for the further processing of the mushroom-filled containers.

Such a method is known, it is widely used in manually harvesting mushrooms. The mushrooms are manually harvested from a cultivating bed, after which the bottoms are separated from the mushroom and the mushrooms are placed in a box or a crate without the bottoms that have been separated therefrom. Once a particular number of containers have been filled, the mushroom picker carries the containers to a collecting location in the cultivating space. From the collecting location, the containers are transported to a processing space. As a rule this is done by mobile means of transport. A drawback of the known method, however, it is the fact that carrying the containers to the collecting location is time-consuming and heavy work. As a rule, the harvesting of mushrooms is carried out by women, for whom the carrying of the mushrooms is an extra heavy burden.

Consequently it is an object of the present invention to provide a method for manually harvesting mushrooms which saves time and/or which makes the mushroom picker's work easier. According to the invention, this object is accomplished in that in step d) the container, which is filled with a number of manually harvested mushrooms from which the stem bottoms have been separated, is placed on a conveyor that transports the container to the processing space. Since the container is placed on the conveyor by the mushroom picker for further transport, the mushroom picker need not interrupt the harvesting work for carrying the mushrooms to a collecting location. As a result, the mushroom picker will have more effective working time available for the actual harvesting of mushrooms. Moreover, the mushroom picker need not carry harvested mushrooms to a collecting location, which makes the mushroom picker's work easier. An additional advantage is the fact that because the filled containers are directly transported onwards, a space for building up an intermediate stock of filled containers before said filled containers are taken to the collecting location is not needed. Because such a buffer stock is not present, the working environment of the mushroom picker is more conveniently arranged, which will further enhance the picker's productivity. Furthermore, the number of operations to be carried out with packed mushrooms is reduced, as a result of which a saving in working hours and processing time is achieved.

At the beginning of the present document a method has been discussed in which mushrooms are transported in unpacked condition on sloping conveyor belts, after which the stem bottoms are separated from the mushrooms by mechanical means. After the stem bottoms have been mechanically separated, the mushrooms must be packed in a separate step, however. Said method is less efficient than the method according to the invention, therefore. In addition, the mushrooms are easily damaged as a result of the mechanical treatment with this known method, so that they are of a lower quality.

Preferably, the containers are placed on a belt conveyor or a roller conveyor in step d). The containers can be carried off for further processing in a quick and inexpensive manner by the belt conveyor or the roller conveyor. There is no chance of a buffer stock being formed on such conveyors, because the container is carried off directly after being placed on the conveyor belt or roller conveyor. The mushroom picker is preferably moved in vertical and/or horizontal direction with respect to the cultivating bed on a personnel-moving device. As a result, the mushroom picker will be suitably positioned with respect to the cultivating bed at all times for harvesting mushrooms. It is also possible, however, for the containers to be buffered on a stationary belt until the belt in question is driven to transport the containers.

In this connection it is preferable if the conveyor at least substantially follows the vertical movement of the personnel-moving device. This ensures that the conveyor will be oriented at substantially the same height relative to the mushroom picker at all times, which will have a positive effect on the efficiency and the productivity of the harvesting operation.

Preferably, the containers are transported to a collecting conveyor by a number of conveyors. Collecting the containers from a number of conveyors on one conveyor is advantageous from a logistics point of view, because the number of conveyors that extend in the direction of the processing space will thus be lower than the number of conveyors on which the containers are directly placed.

It is preferable in that connection if maximally one conveyor at a time places the containers that are present thereon on the collecting conveyor. This aspect also relates to containers being indirectly placed on the collecting conveyor via or on one or more conveyor belts. This is done in order to prevent a situation in which a container being placed on the collecting conveyor by one conveyor comes into contact with a container from another conveyor, which is already present on the collecting conveyor, which might lead to stoppages on the collecting conveyor.

The mushroom-filled containers are preferably transported through a refrigeration space on the collecting conveyor, in which refrigeration space the mushrooms are cooled to a temperature of less than 10 °C, preferably 2-3 °C. The refrigeration space preferably has a capacity geared to cooling the mushrooms in a short time, because this will significantly increase the shelf life of the mushrooms.

Preferably, the collecting conveyor carries the containers past a weighing device, where the containers are weighed. Said weighing is relevant in connection with the further processing of the containers, viz. the sorting or the checking of the weight thereof.

Once the containers have passed the weighing device, they are preferably carried past a sorting device, which sorting device sorts the containers according to weight. This can be done in two different ways, which are preferably combined.

In the first place, it is preferable if the sorting device places containers having a weight outside a specified weight range, or each of a number of specified weight ranges, on a bypass conveyor. So far the containers have been filled by the mushroom pickers according to their own judgment. The law prescribes that a specific type of container must not contain less than a specified minimum weight. This leads to containers being filled to a relatively great weight. On the one hand fines for underweight packages are prevented by removing containers which are (too) light, whilst on the other hand containers which are (too) heavy are removed from the flow of containers to ensure that not one overweight container will leave the premises.

In the second place, it is preferable if mushrooms are added to the container or taken from the container on the bypass conveyor, so that the weight of the container will be within a specified weight range, after which the container is transported to the collecting conveyor. This ensures in an efficient manner that the mushroom-filled containers will meet the requirements made thereof and that no mushrooms will be lost on account of the containers being incorrectly filled.

The sorting device preferably sorts the containers on the basis of different weight ranges. This makes it possible to distinguish between different types of containers and to lead them to different processing units, where the various containers are packed (in parallel) into outer packs suitable for transporting the mushrooms to a customer.

Preferably, said packing of the containers into outer packs is carried out automatically in a packing device. This prevents unnecessary handling by persons.

The containers are preferably provided with a unique identification code and are preferably carried past at least one reading device on the conveyor or on the collecting conveyor. In this way it is possible, depending on the manner in which the reading device is connected to other equipment, to collect data relating to the cultivating beds from which the mushrooms originate, the mushroom pickers that have harvested the mushrooms and the volume of mushrooms that has been processed during a unit of time. These data can be analysed for various purposes, providing they are stored in a storage medium such as a computer memory.

In the foregoing an arrangement and a method for harvesting and processing mushrooms in an efficient manner have been described. It will be immediately apparent to those skilled in the art that a number of devices or steps can lead to efficiency improvements independently of the other devices or steps. Thus, the logistics path that starts with (the placing on) the collecting conveyor can also be used with mushrooms that have been harvested and packed in a different manner for the purpose of further processing the containers in an efficient manner. Furthermore, at different sequence may be used for carrying out the logistics steps following the placement of the containers on the conveyor.

Hereinafter a few preferred embodiments of the present arrangement will be discussed merely by way of example with reference to the appended figures, in which:
Figure 1 is a cross-sectional view of a cultivating space comprising an arrangement according to the present invention; and
Figure 2 is a top plan view of a collecting conveyor and a processing device according to the present invention.

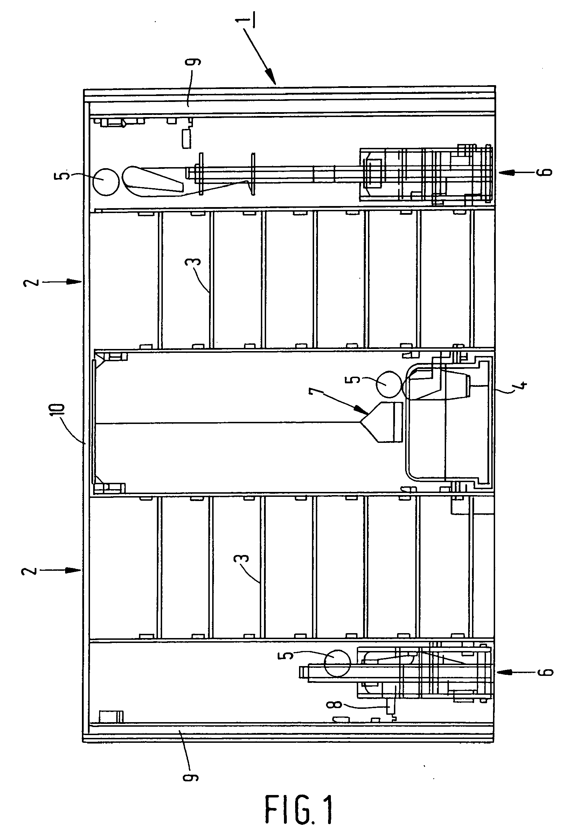

Figure 1 is a cross-sectional view of the cultivating space 1 for mushrooms, in which two stands 2 with cultivating beds 3 stacked one above the other are disposed. Positioned between the stands 2 is a device 4 for moving a mushroom picker 5, whilst two lorries 6 each carrying a mushroom picker 5 are present on the opposite sides of the stands 2. Disposed above the personnel-moving device 4 is a conveyor belt 7 for mushroom-filled containers that are suspended from the ceiling 10. A conveyor belt 8, which is suspended from a wall 9 of the cultivating space, is positioned beside the lorries 6 at all times.

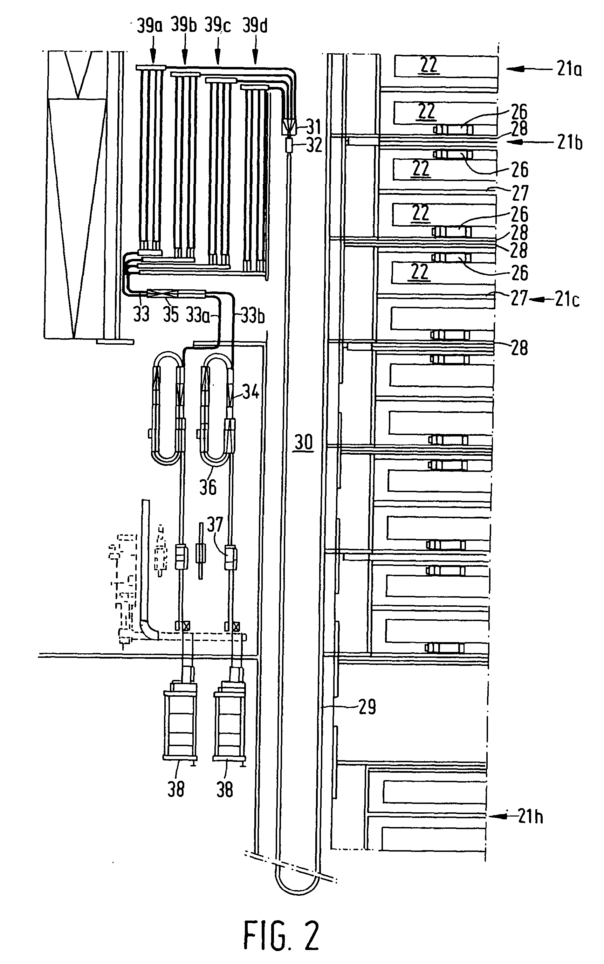

With reference to figure 2, in which like elements are indicated by the same numeral as in figure 1 augmented by 20, a number of cultivating spaces 21 a-21 h according to the present invention are shown, in each of which two stands 22 with cultivating beds are disposed, each stand being flanked by a lorry 26 and a personnel-moving device 24 and the associated conveyor belts 27, 28. The conveyor belts 27, 28 connect to a collecting conveyor 29, which is disposed in a refrigeration space 30. The collecting conveyor connects to a distribution station 31 provided with a first reading device 32, in which the containers are distributed over processing conveyors 39a-39d for placing covers on the containers. From said station the containers are placed on a collecting conveyor 33 again, which connects to a weighing and sorting device 34 provided with a second reading device, where a bypass conveyor 36 branches off the collecting conveyor 33. The bypass conveyor 36 is arranged for correcting incorrect weights and subsequently rejoins the collecting conveyor 33 upstream of the weighing and sorting device 34 provided with the second reading device. The collecting conveyor 33 subsequently connects to a packing device 37, which is capable of packing the mushrooms into an outer pack suitable for further transport by a lorry 38.

With reference to figure 1, a cultivating space 1 is shown in which mushroom pickers 5 present on a personnel-moving device 4 and lorries 6 are oriented with respect to cultivating beds 3 for harvesting mushrooms from the cultivating beds 3 in question. While harvesting, a mushroom picker 5 is moved to the cultivating beds 3 to be harvested by a lorry 6 or a personnel-moving device 4. The mushroom picker 5 can control this movement himself, but the lorry 6 or the personnel-moving device 4 may also be preprogrammed for moving a mushroom picker 5 past a cultivating bed 3 at a specified speed. The mushroom picker 5 has been instructed to harvest mushrooms of a specified size from the beds 3 and to leave mushrooms of a different size as they are. He picks the mushrooms that have the specified size from the bed 3, then cuts bottom from the mushroom stem and an subsequently places the mushroom in a container such as a box or a crate (not shown) for the mushrooms. The empty containers for packing the mushrooms can be moved along with the picker on the personnel-moving device. When the mushroom picker 5 thinks that the box or the crate is filled with the correct amount of mushrooms, he or she will place the box or the crate on a respective conveyor belt 7 or 8. The conveyor belt 7 or 8 transports the mushroom-filled container either directly or with intervals in the desired direction. When the mushroom picker is moved in vertical direction, i.e. to a higher or a lower cultivating bed 3, on the lorry 6 or the personnel-moving device 4, the respective conveyor belt 7 or 8 will move the same distance in vertical direction with respect to the wall 9 or the ceiling 10, respectively, of the cultivating space 1. The conveyor belt 7 or 8 remains stationary in vertical direction with respect to the mushroom picker, as it were. When a mushroom picker 5 moves himself in the longitudinal direction (i.e. perpendicular to the plane of the drawing) on the lorry 6 or the personnel-moving device 4, the respective conveyor belt 7 or 8 remains stationary, and the mushroom picker moves with respect to the conveyor belt 7 or 8. Since the conveyor belt 7 or 8 extends along the entire length of a cultivating bed 3, there is no need for the conveyor belt 7 or 8 to move upon movement of the mushroom picker a 5 in horizontal direction.

With reference to figure 2, mushroom-filled containers are carried to a collecting conveyor 29 either directly from conveyor belts 28 or indirectly from conveyor belts 27 via one of the conveyor belts 28. The figure does not show that conveyor belts to which several conveyor belts connect (can) only receive (receives) containers from one belt at a time, thus preventing containers from different supply conveyors from coming into contact with each other on a collecting conveyor and interfering with the transport. The collecting conveyor 29 is disposed in a refrigeration space 30, in which the mushrooms are quickly cooled down to a temperature of 2-3 °C, the temperature at which fresh mushrooms are best preserved. The collecting conveyor 29 extends along all the cultivating spaces 21 a-21h and is sufficiently long for buffering containers thereon when more mushrooms are being harvested than the processing device is capable of processing. The collecting conveyor 29 passes a first reading device 32, which determines on which one of a number of processing conveyors 39a-39d the container is to be moved in the distribution station 31. This makes it possible for different packing units from different cultivating spaces 21 being indiscriminately transported to the processing device on the collecting conveyor 29 without interfering with the further processing of the containers. Once the containers have been provided with a cover, they are carried to a further collecting conveyor 33, to a second reading device 35, where the containers are distributed over two further collecting conveyors 33a, 33b on the basis of the type of packing unit. It is also possible to provide more than two further collecting conveyors, however, if this is advisable in view of the number of different packing units. The containers are carried to a weighing and sorting device 34 on said further collecting conveyors, where containers having a weight within a specified weight range are transported further and containers having a weight outside said specified weight range are placed on a bypass conveyor 36. On said bypass conveyor 36, the weight of the containers in question is corrected and subsequently said containers are placed back on the collecting conveyor 33a, 33b upstream of the weighing and sorting device 34, so that the weight of the container in question is checked once again. If the weight of the container is within the specified weight range, the container is transported to a packing device 37 where the mushroom-filled containers are packed into an outer pack. This may be a pallet, a container truck or other type of container. After being re-packed in the re-packing device 37, the harvested mushrooms are loaded into a truck 38 for transport to a specified destination.

Using a combination of an arrangement for harvesting and processing mushrooms as described above, mushrooms can be loaded into the truck within two hours after being harvested from the mushroom bed. The shelf life of the mushrooms is optimised by refrigerating the mushrooms as soon as they leave the cultivating space. The longer shelf life of the mushrooms makes it possible to bridge a greater distance to a customer or to offer the mushrooms for sale for a longer period of time in a shop. The radius of action of the truck that transports fresh mushrooms is currently about 750 kilometres, which radius can be increased by processing the mushrooms in an arrangement according to the present invention.

The embodiments of the invention that have been described above are only given by way of explanation of the invention and by no means limit the scope of the invention, which is defined in the appended claims. Several variants to the above-described concepts are available to those skilled in the arts, all of which variants fall within the aforesaid scope. Thus, the various steps following the packing of the mushrooms can be carried out in a different sequence or the number of parallel processing steps can be increased or decreased.

## Claims

1. An arrangement for processing cultivated mushrooms, comprising at least one elongated cultivating bed for mushrooms, which extends in a longitudinal direction in a cultivating space, at least one personnel-moving device, which functions to move a mushroom picker with respect to the cultivating bed for manually harvesting mushrooms, separating the bottoms from the stems of the harvested mushrooms and packing the harvested mushrooms from which the bottoms have been separated in a container, **characterized in that** at least one conveyor is provided, which conveyor is arranged for conveying containers filled with mushrooms from which the stem bottoms have been removed to a location outside the cultivating space.

2. An arrangement according to claim 1, **characterized in that** the conveyor comprises a conveying surface which extends at least substantially horizontally in a direction perpendicular to the direction of transport.

3. An arrangement according to claim 1 or 2, **characterized in that** said at least one personnel-moving device is guidingly connected in use to a stand that supports a cultivating bed.

4. An arrangement according to any one or more of the preceding claims, **characterized in that** said at least one personnel-moving device is motor-driven, with the speed of movement of said at least one personnel-moving device being adjustable.

5. An arrangement according to any one or more of the preceding claims, **characterized in that** said at least one conveyor is so positioned with respect to a cultivating bed to be harvested that said at least one personnel-moving device moves between the cultivating bed and said at least one conveyor in use.

6. An arrangement according to any one or more of the preceding claims, **characterized in that** in use said at least one conveyor is positioned within reach of the mushroom picker from said at least one personnel-moving device.

7. An arrangement according to claim 6, **characterized in that** said at least one conveyor extends at least substantially parallel to the longitudinal direction of said at least one cultivating bed, substantially along the entire length thereof.

8. An arrangement according to any one or more of the preceding claims, **characterized in that** said at least one conveyor is adjustable for height.

9. An arrangement according to claim 8, **characterized in that** the vertical adjustment of said at least one conveyor is linked to the vertical position of said at least one personnel-moving device.

10. An arrangement according to any one or more of the preceding claims, **characterized in that** said at least one conveyor is a belt conveyor or a roller conveyor.

11. An arrangement according to any one or more of the preceding claims, **characterized in that** said at least one conveyor extends as far as a packing space for packing the mushrooms in an outer pack.

12. An arrangement according to any one or more of the preceding claims, **characterized in that** a number of conveyors are provided, which conveyors discharge the packed mushrooms from one or more cultivating spaces onto a collecting conveyor.

13. An arrangement according to claim 12, **characterized in that** the collecting conveyor extends at least partially into a collecting space outside the cultivating space, which collecting space is climate-controlled.

14. An arrangement according to claim 13, **characterized in that** the collecting space comprises refrigeration apparatus for cooling down the mushrooms in the collecting space to a temperature below 10 °C.

15. An arrangement according to any one or more of the preceding claims, **characterized in that** said at least one conveyor or said collecting conveyor comprises a buffering portion, so that it is possible to form a buffer of harvested and packed mushrooms that are to be packed into an outer pack.

16. An arrangement according to any one or more of the preceding claims, **characterized in that** the arrangement comprises a reading device for reading a code that is present on a container.

17. An arrangement according to any one or more of the preceding claims, **characterized in that** the arrangement comprises a weighing device for weighing mushroom-filled packing units.

18. An arrangement according to claims 16 and 17, **characterized in that** the weighing device is connected to the reading device and to a memory for the storage of data relating to weights per code.

19. An arrangement according to any one or more of the claims 16-18, **characterized in that** the arrangement comprises a sorting device for sorting the various containers according to at least one specified weight range.

20. An arrangement according to claim 19, **characterized in that** the arrangement furthermore comprises a bypass conveyor on which containers having a weight outside said at least one specified weight range are to be placed.

21. An arrangement according to any one or more of the preceding claims, **characterized in that** the arrangement comprises at least one packing device for packing the containers into an outer pack.

22. An arrangement according to claim 21, **characterized in that** the arrangement comprises a number of packing devices for the parallel packing of various containers having a weight within various specified weight ranges into outer packs.

23. A method for manually harvesting mushrooms and transporting the harvested mushrooms to a processing space, comprising the steps of:
a) a mushroom picker manually harvesting a mushroom from a cultivating bed for mushrooms;
b) the mushroom picker separating the bottom from the stem of the mushroom;
c) the mushroom picker placing the mushroom from which the stem bottoms has been separated into a container;
d) transporting the container filled with a number of manually harvested mushrooms from which the stem bottoms have been separated to a processing space for the further processing of the mushroom-filled containers,
**characterized in that** in step d) the container, which is filled with a number of manually harvested mushrooms from which the stem bottoms have been separated, is placed on a conveyor that transports the container to the processing space.

24. A method according to claim 23, **characterized in that** the containers are placed on a belt conveyor or a roller conveyor in step d).

25. A method according to claim 23 or 24, **characterized in that** in step a) the mushroom picker is moved in vertical and/or horizontal direction with respect to the cultivating bed on a personnel-moving device.

26. A method according to claim 24, **characterized in that** the conveyor follows the vertical movement of the personnel-moving device at least substantially.

27. A method according to any one or more of the claims 23-25, **characterized in that** the containers are transported to a collecting conveyor by a number of conveyors.

28. A method according to claim 27, **characterized in that** maximally one conveyor at a time places the containers that are present thereon on the collecting conveyor.

29. A method according to claim 28, **characterized in that** the mushroom-filled containers are transported through a refrigeration space on the collecting conveyor, in which refrigeration space the mushrooms are cooled down to a temperature of less than 10 °C.

30. A method according to claim 28 or 29, **characterized in that** the collecting conveyor carries the containers past a weighing device, where the containers are weighed.

31. A method according to claim 30, **characterized in that** once the containers are carried past a sorting device after they have passed the weighing device, which sorting device sorts the containers according to weight.

32. A method according to claim 31, **characterized in that** the sorting device places containers having a weight outside a specified weight range, or each of a number of specified weight ranges, on a bypass conveyor.

33. A method according to claim 32, **characterized in that** mushrooms are added to the container or taken from the container on said bypass conveyor, so that the weight of the container will be within a specified weight range, after which the container is transported to the collecting conveyor.

34. A method according to any one or more of the claims 30-33, **characterized in that** the sorting device sorts the containers on the basis of different weight ranges.

35. A method according to any one or more of the claims 23-34, **characterized in that** the containers are automatically packed into outer packs in a packing device.

36. A method according to any one or more of the claims 23-35, **characterized in that** the containers are provided with a unique identification code, and the filled containers are carried past at least one reading device on a conveyor or on said collecting conveyor.
